# EUROPÄISCHE PATENTSCHRIFT

(11) **EP 2 360 854 B1**
(45) Veröffentlichungstag und Bekanntmachung des Hinweises auf die Patenterteilung: **01.04.2015**
(21) Anmeldenummer: 11001032.9
(22) Anmeldetag: 09.02.2011
(51) Int. Cl.: H04B 7/12, H04B 7/06

(54) **Verfahren und Vorrichtung zur Informationsübertragung**
Method and apparatus for transmission of information
Procédé et dispositif pour la transmission d'information

(30) Priorität: 11.02.2010 DE 102010007521
(43) Veröffentlichungstag der Anmeldung: 24.08.2011
(73) Patentinhaber: MBDA Deutschland GmbH, 86529 Schrobenhausen (DE)
(72) Erfinder: Rieck, Wolfgang, 85521 Ottobrunn (DE); Schwab, Wolfgang, Dr., 80637 München (DE)
(74) Vertreter: Avenhaus, Beate

(56) Entgegenhaltungen:
- EP-A2- 0 526 704
- EP-A2- 1 848 120
- US-A1- 2007 259 643

## Beschreibung

### TECHNISCHES GEBIET

Die vorliegende Erfindung betrifft eine Vorrichtung zur Informationsübertragung gemäß dem Oberbegriff der Patentansprüche 1 und 2.

### STAND DER TECHNIK

Die Datenübertragung über Funk (Datenlink) mittels omnidirektionaler oder schwach bündelnder Antennen, beispielsweise zwischen einem Lenkflugkörper und der diesem zugeordneten Kontrollstation, ist störungsanfällig und kann beispielsweise durch Störsender unterbrochen werden, was möglicherweise zu einem Verlust des Lenkflugkörpers führt. Herkömmliche Transceiver für Datenlinkverbindungen zwischen Flugkörper und Kontrollstation arbeiten immer in einem dezidierten Frequenzband, das häufig sehr schmalbandig ausgebildet ist. Dadurch ist diese Datenlinkverbindung potentiell durch elektronische Störmaßnahmen im Betriebsfrequenzband gefährdet. Weiterhin ist diese Konstellation anfällig gegenüber Mehrwegeausbreitung im genutzten Betriebsfrequenzband. Auch bei einer breitbandigen Datenübertragung können Breitbandstörer die Funkkommunikation und damit die gesamte Datenlinkverbindung stark beeinflussen. Selbst Systeme mit sogenannten Frequency-Hopping-Eigenschaften, die innerhalb eines Frequenzbandes sprunghaft die Übertragungsfrequenz wechseln, können Probleme mit Breitbandstörern oder Repeaterstörern bekommen, welche im gleichen Frequenzband arbeiten.

Die EP 0 526 704 A2 beschreibt ein Kommunikationssystem mit einem Modulator, der einen Träger, der als Grundwelle mit zu übertragenden Daten dient, moduliert, um dadurch ein moduliertes Ausgangssignal zu erzeugen, das die Grundwelle und eine Harmonische der Grundwelle umfasst. Eine Sendeantenne sendet das modulierte Ausgangssignal. Eine Empfangsantenne empfängt das gesendete modulierte Ausgangssignal. Ein Diversifizierungs-Zweig erzeugt ein Ausgangssignal mit einem Diversifizierungs-Effekt auf der Grundlage der Grundwelle und der Harmonischen. Ein Demodulator demoduliert das Ausgangssignal, wodurch Ausgangsdaten entsprechend den Daten, die übertragen werden, ausgegeben werden.

Die EP 1 848 120 A2 beschreibt eine Multimediavorrichtung zur drahtlosen Signalübertragung bekannt, mittels welcher Multimediasignale drahtlos über zwei Übertragungsstrecken übertragen werden. Durch diese Übertragung mittels zwei Übertragungsstrecken sollen Störungen durch Fading, Interferenz oder Rauschen vermieden werden, die bei Nutzung nur einer Übertragungsstrecke die Qualität des übertragenen Signals schwächen. Die Signalübertragung erfolgt bei dieser Vorrichtung auf zwei Kanälen desselben Radiofrequenz(RF)-Spektrums, also desselben Frequenzbands. Weiterhin wird beschrieben, dass die beiden Kanäle auch unterschiedlichen Frequenzbändern angehören können.

Die US 2007/0259643 A1 beschreibt einen Hochfrequenzempfänger mit einem ersten und einem zweiten rauscharmen Verstärker (LNA), einem lokalen Oszillatormodul und einem ersten, zweiten und dritten Mischer.

### DARSTELLUNG DER ERFINDUNG

Aufgabe der vorliegenden Erfindung ist es daher, eine Vorrichtung zur Informationsübertragung, insbesondere zur Datenübertragung, mittels Funk zwischen einem Sender und einem Empfänger anzugeben, die unempfindlicher gegen externe Störungen ist und das insbesondere den Datenaustausch über Funk zwischen einem Lenkflugkörper und der diesem zugeordneten Kontrollstation zuverlässiger und störsicherer macht.

Die die Vorrichtung betreffende Aufgabe wird gelöst durch die in den unabhängigen Ansprüchen angegebenen Vorrichtungen.

Bei einem Verfahren zur Informationsübertragung zwischen einem Sender und einem Empfänger, bei welchem die zu übertragende Information auf ein Trägersignal aufmoduliert wird und vom Sender an den Empfänger übertragen wird, sind zur Übertragung der Information zwischen Sender und Empfänger zumindest zwei parallele Übertragungsstrecken vorgesehen. Die Information wird im Sender auf ein erstes Trägersignal und/oder auf zumindest ein zweites Trägersignal aufmoduliert, wobei die Trägerfrequenz des ersten modulierten Trägersignals und die Trägerfrequenz des zweiten modulierten Trägersignals unterschiedlichen Frequenzbändern angehören, und der Empfänger empfängt und demoduliert die zumindest zwei modulierten Trägersignale, um die Information daraus rückzugewinnen.

### VORTEILE

Die Verwendung zweier paralleler Übertragungsstrecken, auf denen die Information auf zwei unterschiedliche Trägersignale aufmoduliert übertragen wird, welche unterschiedlichen Frequenzbändern angehören, senkt die Gefahr der Störung der Signalübertragung deutlich. Diese Robustheit gegenüber Störmaßnahmen wird insbesondere durch die Unterschiedlichkeit der Frequenzbänder der Trägerfrequenzen gewonnen, weil zur Störung dieser erfindungsgemäß durchgeführten Informationsübertragung zwei Frequenzbänder gleichzeitig gestört werden müssten.

Vorteilhaft ist es, wenn die Trägerfrequenz des ersten modulierten Trägersignals dem ZF-Band und die Trägerfrequenz des zweiten modulierten Trägersignals dem HF-Band angehört. Durch diese Maßnahme liegen die beiden für die Übertragung benutzten Trägerfrequenzen so weit auseinander, dass sie nicht mit einer einzigen Störmaßnahme gestört werden können. Es müssen somit zumindest zwei Störsender vorgesehen sein, um die Informationsübertragung zu beeinträchtigen.

Vorzugsweise ist die Trägerfrequenz des zweiten modulierten Trägersignals um einen Faktor von mehr als fünf größer als die Trägerfrequenz des ersten modulierten Trägersignals. Insbesondere ist das zweite modulierte Trägersignal vorzugsweise um einen Faktor zehn größer als die Trägerfrequenz des ersten modulierten Trägersignals.

Eine vorzugsweise Ausgestaltung besteht darin, dass der Sender das erste modulierte Trägersignal und das zweite modulierte Trägersignal abwechselnd sendet; dass der Empfänger beide modulierten Trägersignale empfängt; und dass das empfangene erste modulierte Trägersignal und das empfangene zweite modulierte Trägersignal gemeinsam zur Rückgewinnung der Information herangezogen werden. Dieses abwechselnde Übertragen der modulierten Trägersignale und deren entsprechende abwechselnde Verwendung zur Rückgewinnung der Information auf der Empfängerseite gewährleistet, dass dann, wenn eines der Frequenzbänder gestört ist, wenigstens die über das andere Frequenzband übertragene Information ungestört empfangen werden kann.

Eine dazu alternative Realisierung zeichnet sich dadurch aus, dass der Sender das erste modulierte Trägersignal und das zweite modulierte Trägersignal gleichzeitig sendet; dass der Empfänger beide modulierten Trägersignale empfängt und dass das empfangene erste modulierte Trägersignal und das empfangene zweite modulierte Trägersignal abwechselnd zur Rückgewinnung der Information herangezogen werden. Bei dieser Realisierung kann durch das abwechselnde Verwenden der übertragenen modulierten Trägersignale das Risiko der Störung durch auf ein Frequenzband einwirkende Störmaßnahmen deutlich herabgesetzt werden.

Dabei ist es besonders von Vorteil, wenn in einem vorgegebenen Zeitintervall stets dasjenige empfangene modulierte Trägersignal zur Rückgewinnung der Information herangezogen wird, das eine höhere Empfangsqualität und/oder eine geringere Signalstörung aufweist. Durch diese Maßnahme wird stets das bessere der empfangenen Signale zur Rückgewinnung der Information verwendet. Diese Maßnahme ermöglicht es, selbst bei Störungen auf beiden Frequenzbändern, noch eine brauchbare Rückgewinnung der Information zu ermöglichen.

Vorzugsweise erfolgt die Rückgewinnung der Information durch Addition von jeweils einen Informationsbestandteil enthaltenen Signalen, die aus den beiden empfangenen modulierten Trägersignalen erhalten werden. Mit dieser Signaladdition lässt sich fehlende Signalinformation auf einem der Übertragungswege durch entsprechende Signalinformation, die auf dem anderen Übertragungsweg gewonnen worden ist, ergänzen. Selbst wenn beide empfangenen Informationen in ihrer Qualität beeinträchtigt sind, kann die Signaladdition bewirken, dass die Summe der beeinträchtigten Signalinformationen wieder eine verwertbare Signalinformation liefert.

Eine andere alternative Realisierung zeichnet sich dadurch aus, dass der Sender das erste modulierte Trägersignal und das zweite modulierte Trägersignal gleichzeitig sendet; dass der Empfänger beide modulierten Trägersignale empfängt; und dass das empfangene erste modulierte Trägersignal und das empfangene zweite modulierte Trägersignal gleichzeitig gemeinsam zur Rückgewinnung der Information herangezogen werden.

Bei dieser Variante wird die jeweilige Information der beiden modulierten Trägersignale nicht bereits im Empfänger zusammengeführt, sondern erst in einer nachgeordneten Verarbeitungseinrichtung.

Dabei ist es besonders vorteilhaft, wenn die Rückgewinnung der Information durch kohärente Überlagerung von zwei Signalen erfolgt, die jeweils aus einem der empfangenen modulierten Trägersignale erhalten werden.

Die erfindungsgemäße Vorrichtung zeichnet sich aus durch einen Sender und einen Empfänger sowie zumindest zwei zwischen Sender und Empfänger gebildete parallele Übertragungsstrecken.

Wenn an dieser Stelle und in der gesamten Anmeldung von einer ersten und einer zweiten Übertragungsstrecke gesprochen wird, so ist die vorliegende Erfindung nicht auf zwei Übertragungsstrecken mit ihren jeweiligen Sendevorrichtungen und Empfangsvorrichtungen beschränkt, sondern es können auch mehr als zwei Übertragungsstrecken mit entsprechenden Sende- beziehungsweise Empfangsvorrichtungen vorgesehen sein. Durch Erhöhung der Anzahl der Übertragungsstrecken mit jeweils weit voneinander entfernt liegenden Frequenzbändern der jeweiligen Trägerfrequenz wird die Störanfälligkeit weiter reduziert und damit die Zuverlässigkeit der Signalübertragung erhöht; allerdings steigt die Komplexität mit der Anzahl der Übertragungsstrecken.

Eine bevorzugte Vorrichtung zeichnet sich dadurch aus, dass der Sender einen ZF-Umsetzer aufweist, der ein die Information tragendes Eingangssignal in eine Frequenz eines ZF-Bandes umsetzt; dass das ZF-Signal einer ersten Sendevorrichtung sowie einem ZF-HF-Umsetzer zugeführt wird, der das ZF-Signal in ein HF-Signal umsetzt; dass das HF-Signal einer zweiten Sendevorrichtung zugeführt wird, wobei der Sender so ausgestaltet ist, dass er das ihm zugeführte Signal abwechselnd oder gleichzeitig über zumindest zwei parallele Übertragungsstrecken an den Empfänger überträgt; dass der Empfänger zwei Empfangsvorrichtungen aufweist, die ausgestaltet sind, um jeweils eines der beiden von den Sendevorrichtungen übertragenen Signale zu empfangen; dass der das HF-Signal empfangenden Empfangsvorrichtung eine HF-ZF-Umsetzungsvorrichtung zugeordnet ist, die das empfangene HF-Signal in ein ZF-Signal umsetzt, welches dieselbe Trägerfrequenz aufweist wie das von der anderen Empfangsvorrichtung direkt empfangene ZF-Signal; und dass zur Weiterverarbeitung der beiden gewonnenen ZF-Signale entweder ein Signaladdierer oder ein Signalumschalter vorgesehen ist, der aus den beiden ihm zugeführten ZF-Signalen ein kombiniertes ZF-Signal erzeugt und an nachgeordnete Verarbeitungseinrichtungen zur Weiterverarbeitung und zur Rückgewinnung der Information weiterleitet. In beiden Fällen erfolgt die Signalzusammenführung bereits im Empfänger und das kombinierte Signal, das über beide Übertragungsstrecken empfangen worden ist, wird zur Weiterleitung vom Empfänger an nachgeordnete Verarbeitungseinrichtungen abgegeben.

Alternativ dazu ist eine Vorrichtung, die sich dadurch auszeichnet, dass der Sender einen ZF-Umsetzer aufweist, der ein die Information tragendes Eingangssignal in eine Frequenz eines ZF-Bandes umsetzt; dass das ZF-Signal einer ersten Sendevorrichtung sowie einem ZF-HF-Umsetzer zugeführt wird, der das ZF-Signal in ein HF-Signal umsetzt; dass das HF-Signal einer zweiten Sendevorrichtung zugeführt wird, wobei der Sender so ausgestaltet ist, dass er das ihm zugeführte Signal abwechselnd oder gleichzeitig über zumindest zwei parallele Übertragungsstrecken an den Empfänger überträgt; dass der Empfänger zwei Empfangsvorrichtungen aufweist, die ausgestaltet sind, um jeweils eines der beiden von den Sendevorrichtungen übertragenen Signale zu empfangen; dass der das HF-Signal empfangenden Empfangsvorrichtung eine HF-ZF-Umsetzungsvorrichtung zugeordnet ist, die das empfangene HF-Signal in ein ZF-Signal umsetzt, welches dieselbe Trägerfrequenz aufweist wie das von der anderen Empfangsvorrichtung direkt empfangene ZF-Signal; und dass zur Weiterverarbeitung beide gewonnenen ZF-Signale an nachgeordnete Verarbeitungseinrichtungen weitergeleitet werden, wo sie kohärent überlagert, demoduliert und decodiert werden, um die Information zurückzugewinnen. Die aus den beiden Übertragungsstrecken gewonnenen Signale werden vom Empfänger getrennt an nachgeordnete Verarbeitungseinrichtungen weitergeleitet und die Kombination der beiden Signale erfolgt erst in den nachgeordneten Verarbeitungseinrichtungen.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: ein Blockschaltbild der erfindungsgemäßen Vorrichtungen als Prinzipschaltbild;
- Fig. 2: ein Blockschaltbild der Senderendstufe des Senders in einem beispielhaften Aufbau;
- Fig. 3: ein Blockschaltbild der Empfängereingangsstufe einer ersten Ausführungsform des Empfängers;
- Fig. 4: ein Blockschaltbild der Empfängereingangsstufe einer zweiten Ausführungsform des Empfängers; und
- Fig. 5: ein Blockschaltbild der Empfängereingangsstufe einer dritten Ausführungsform des Empfängers.

### DARSTELLUNG VON BEVORZUGTEN AUSFÜHRUNGSBEISPIELEN

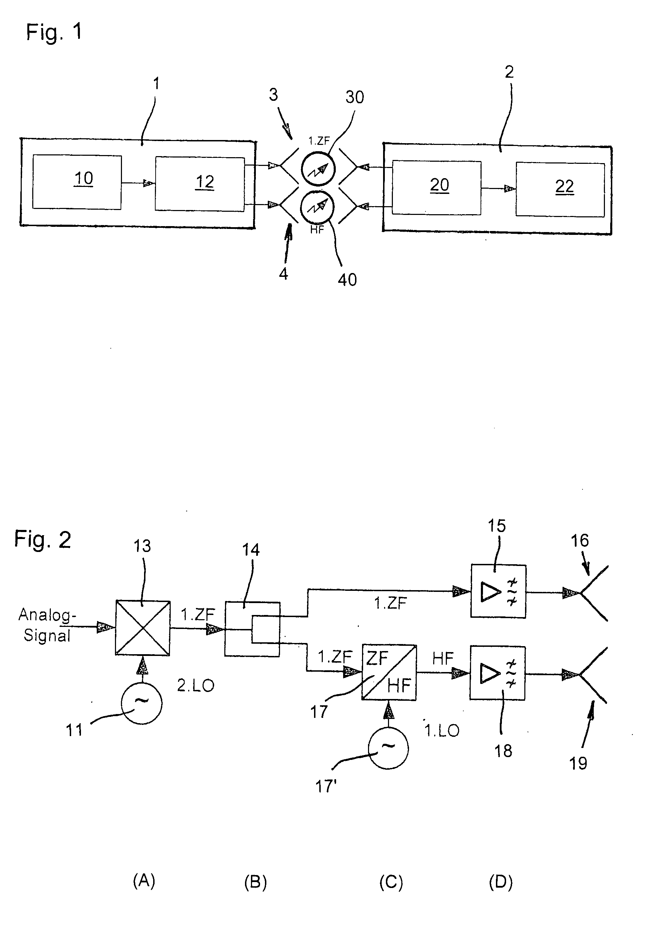

Die in dem Prinzipschaltbild der Fig. 1 gezeigte Doppelband-Datenlinkanordnung besteht aus einem Sender 1 und einem Empfänger 2, die beide nach dem Überlagerungsprinzip (Superhet) mit mindestens einer Zwischenfrequenz (ZF) arbeiten. Das ZF-Band dieser Zwischenfrequenz ist im Sender 1 und im Empfänger 2 identisch. Der Sender 1 weist eine Digitaleinheit 10 und eine Analogeinheit 12 auf. Auch der Empfänger 2 besitzt eine Analogeinheit 20 und eine Digitaleinheit 22.

Zwischen der Analogeinheit 12 des Senders 1 und der Analogeinheit 20 des Empfängers 2 sind zwei Funk-Übertragungsstrecken 3, 4 vorgesehen, von denen eine erste Funkübertragungsstrecke 3 im ersten ZF-Band ein erstes moduliertes Trägersignal 30 sendet und die zweite Funkübertragungsstrecke 4 in einem HF-Band ein zweites moduliertes Trägersignal 40 sendet. Die Funkübertragung zwischen Sender 1 und Empfänger 2 erfolgt somit parallel in zwei getrennten Frequenzbändern, dem HF-Band und dem ersten ZF-Band, welches typischerweise eine um den Faktor zehn geringere Trägerfrequenz im Vergleich zum HF-Band aufweist.

In der Digitaleinheit 10 wird zunächst die Nutzinformation codiert, moduliert und in ein analoges Signal gewandelt, das an die Analogeinheit 12 weitergeleitet wird. Dieses analoge Signal kann entweder ein IQ-Basisbandsignal oder bereits ein ZF-Signal sein. Unter IQ-Basisbandsignal wird ein Signal verstanden, das gemäß der an sich bekannten Quadraturamplitudenmodulation moduliert worden ist.

Fig. 2 zeigt beispielhaft ein Blockschaltbild einer ersten Ausführungsform der Senderendstufe. In der in Fig. 2 gezeigten Endstufe der Analogeinheit 12 wird dieses analoge Signal dann in einer ZF-Stufe durch Mischung mit einem von einem Lokaloszillator 11 erzeugten Lokaloszillatorsignal (2.LO) in das erste ZF-Band umgesetzt (A) und auf zumindest zwei Pfade aufgeteilt (B). Im oberen Pfad wird das erste ZF-Signal in einem ersten Sendeverstärker 15 verstärkt, gefiltert und über eine erste Antenne 16 gesendet (D).

Die Aufteilung des ersten ZF-Signals erfolgt im gezeigten ersten Ausführungsbeispiel der Fig. 2 mittels eines Signalaufteilers 14. Alternativ kann in einer weiteren Ausführungsform der Senderendstufe anstelle des Signalaufteilers 14 ein Signalumschalter vorgesehen sein, der das erste ZF-Signal wechselweise in den oberen Pfad oder in den unteren Pfad leitet.

Im unteren Pfad wird das erste ZF-Signal in einem ZF-HF-Umsetzer 17 durch Mischung mit einem anderen von einem weiteren Lokaloszillator 17' erzeugten Lokaloszillatorsignal (1.L0) in das HF-Band umgesetzt (C), in einem zweiten Sendeverstärker 18 verstärkt, gefiltert und über eine zweite Antenne 19 gesendet (D).

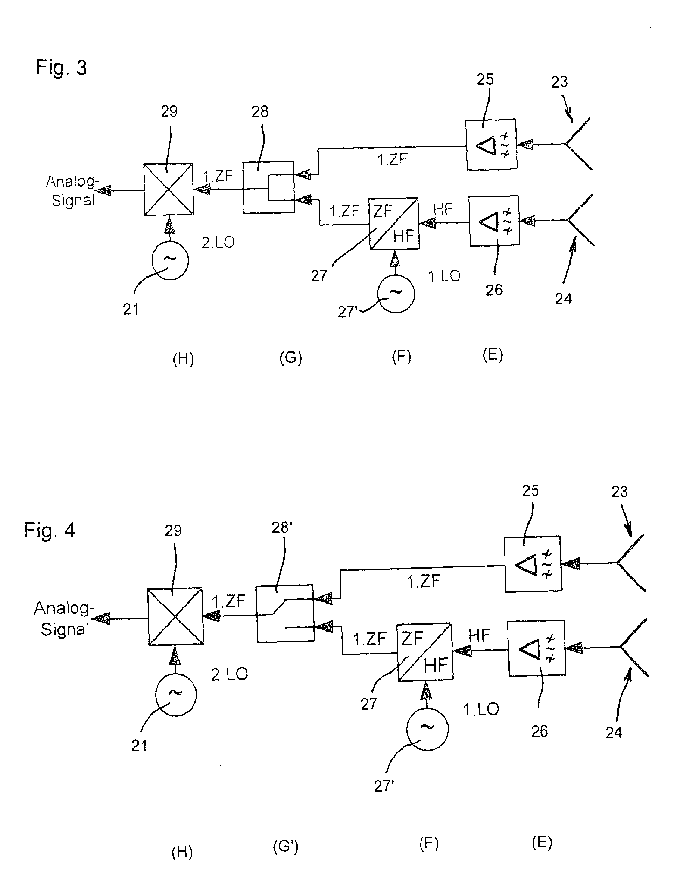

Anhand der Fig. 3 bis 5 werden nachstehend unterschiedliche Empfänger und entsprechende Signalverarbeitungen auf der Empfängerseite beschrieben.

### Erste Ausführungsform: Analoge Signalkombination im ersten ZF-Band bei frequenzalternierendem Sendebetrieb

Fig. 3 zeigt ein Blockschaltbild einer Empfängereingangsstufe der Analogeinheit des Empfängers 2 gemäß einer ersten Ausführungsform der vorliegenden Erfindung mit analoger Signalkombination.

Das über die erste Antenne 23 empfangene modulierte Signal aus dem ersten ZF-Band, das im oberen Pfad der Fig. 3 dargestellt ist, wird in einem ersten Eingangsverstärker 25 gefiltert und verstärkt (E).

Das über die zweite Antenne 24 empfangene modulierte Signal aus dem HF-Band wird in einem zweiten Eingangsverstärker 26 gefiltert und verstärkt (E) und im HF-ZF-Umsetzer 27 mittels eines von einem Lokaloszillator 27' erzeugten Lokaloszillatorsignals (1.LO) in das erste ZF-Band umgesetzt (F), wie im unteren Pfad der Fig. 3 dargestellt ist.

Die Signale aus beiden Pfaden werden einem Signaladdierer 28 zugeführt und dort addiert (G) und anschließend im Signalumsetzer 29 mittels eines von einem weiteren Lokaloszillator 21 erzeugten Lokaloszillatorsignals (2.LO) in ein analoges Signal umgesetzt (H). Dieses analoge Signal kann entweder ein IQ-Basisbandsignal oder ein weiteres ZF-Bandsignal sein. Dieses Analogsignal wird anschließend an die Digitaleinheit 22 des Empfängers 2 weitergeleitet und dort digital gewandelt, demoduliert und decodiert.

Diese in Fig. 3 gezeigte Empfängereingangsstufe wird dann eingesetzt, wenn vom Sender 1 eine abwechselnde Signalübertragung über die beiden Übertragungsstrecken 3, 4 durchgeführt wird, wenn also vom Sender 1 zeitlich alternierend entweder im HF-Band oder im ersten ZF-Band gesendet wird.

### Zweite Ausführungsform: Selektive Empfangsbandauswahl bei parallelem Sendebetrieb in beiden Frequenzbändern

Fig. 4 zeigt eine alternative Ausgestaltung der Empfängereingangsstufe für den Sende-/Empfangsbetrieb mit selektiver Empfangsbandauswahl.

Das mittels der ersten Antenne 23 empfangene modulierte Signal aus dem ersten ZF-Band wird dem ersten Eingangsverstärker 25 zugeführt und dort gefiltert und verstärkt (E), wie im oberen Pfad der Fig. 4 dargestellt ist.

Das mittels der zweiten Antenne 24 empfangene modulierte Signal aus dem HF-Band wird dem zweiten Eingangsverstärker 26 zugeführt und dort gefiltert und verstärkt (E). Anschließend wird dieses Signal an den HF-ZF-Umsetzer 27 weitergeleitet und dort mittels eines von einem Lokaloszillator 27' erzeugten Lokaloszillatorsignals (1.LO) in das erste ZF-Band umgesetzt (F), wie im unteren Pfad der Fig. 4 zu erkennen ist.

Beide ZF-Signale werden dann einem Signalumschalter 28' zugeführt, der abwechselnd entweder das Signal aus dem unteren Pfad oder das Signal aus dem oberen Pfad auswählt (G') und das ausgewählte Signal dann an den Signalumsetzer 29 weiterleitet. Dort wird das zugeleitete ZF-Signal dann mittels eines von einem weiteren Lokaloszillator 21 erzeugten Lokaloszillatorsignals (2.LO) in ein analoges Signal umgesetzt (H), wobei dieses analoge Signal ein IQ-Basisbandsignal oder ein ZF-Bandsignal sein kann. Dieses Analogsignal wird anschließend an die Digitaleinheit 22 des Empfängers 2 weitergeleitet und dort digital gewandelt, demoduliert und decodiert.

Diese in Fig. 4 gezeigte Empfängereingangsstufe wird dann eingesetzt, wenn vom Sender 1 eine parallele Signalübertragung über die beiden Übertragungsstrecken 3, 4 durchgeführt wird, wenn also vom Sender 1 gleichzeitig im HF-Band und im ersten ZF-Band gesendet wird.

Die Empfängereingangsstufen der ersten Ausführungsform gemäß Fig. 3 und der zweiten Ausführungsform gemäß Fig. 4 unterscheiden sich im Wesentlichen darin, dass bei der Ausführungsform nach Fig. 3 der Signaladdierer 28 vorgesehen ist und dass die Ausführungsform nach Fig. 4 stattdessen den Signalumschalter 28' aufweist.

Für den Einsatz der zweiten Ausführungsform der Empfängereingangsstufe, wie sie in Fig. 4 dargestellt ist, ist es erforderlich, dass der Sender 1 auf beiden Übertragungsstrecken 3, 4 gleichzeitig und parallel überträgt. Die Auswahl des Empfangsbandes und die Steuerung des Signalumschalters 28' erfolgt durch eine (nicht gezeigte) Entscheidungsvorrichtung, die auf der Grundlage der Signalgüte entweder der beiden empfangenen Signale oder des an die Digitaleinheit weitergeleiteten Signals die Signalumschaltung vornimmt. Hierbei steht die Sicherheit des Empfangsbetriebs gegenüber Störungen auf den Übertragungswegen im Vordergrund.

### Drittes Ausführungsbeispiel: Zwei getrennte Empfangskanäle bei parallelem Sendebetrieb in beiden Frequenzbändern

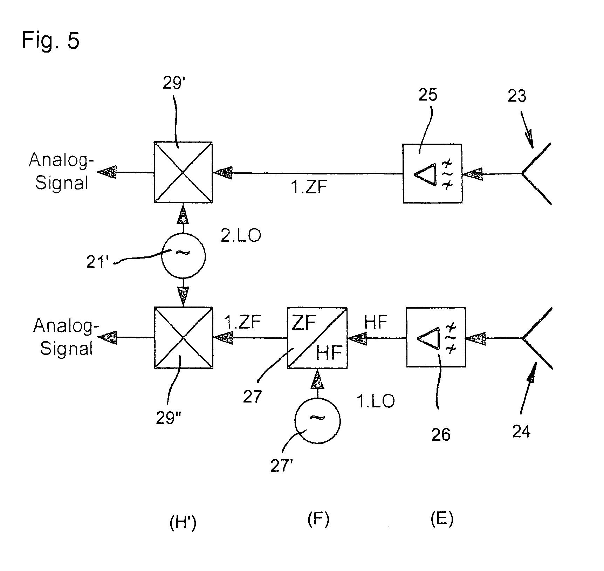

Fig. 5 zeigt ein Blockschaltbild der Empfängereingangsstufe der Analogeinheit 20 des Empfängers mit zwei getrennten Empfangskanälen.

Das mittels der ersten Antenne 23 empfangene modulierte Signal aus dem ersten ZF-Band wird dem ersten Eingangsverstärker 25 zugeführt und dort gefiltert und verstärkt (E), wie im oberen Pfad der Fig. 5 dargestellt ist.

Das mittels der zweiten Antenne 24 empfangene modulierte Signal aus dem HF-Band wird dem zweiten Eingangsverstärker 26 zugeführt und dort gefiltert und verstärkt (E). Anschließend wird dieses Signal an den HF-ZF-Umsetzer 27 weitergeleitet und dort mittels eines von einem Lokaloszillator 27' erzeugten Lokaloszillatorsignals (1.LO) in das erste ZF-Band umgesetzt (F), wie im unteren Pfad der Fig. 5 zu erkennen ist.

Die beiden erhaltenen ZF-Signale werden jeweils einem Signalumsetzer 29', 29" zugeführt, wo sie jeweils in ein analoges Signal umgesetzt werden (H'). Dieses aus dem oberen Pfad beziehungsweise aus dem unteren Pfad erhaltene analoge Signal kann ein IQ-Basisbandsignal oder ein ZF-Bandsignal sein. Da die beiden ZF-Signale demselben ZF-Band angehören, kann für die Signalumsetzung in den Signalumsetzern 29', 29" eine gemeinsame Lokaloszillatorstufe 21' eingesetzt werden.

Die beiden umgesetzten Analogsignale werden dann der Digitaleinheit 22 des Empfängers 2 zugeführt. Dort werden sie digital gewandelt, mittels einer adaptiven Empfängerschaltung kohärent überlagert, demoduliert und decodiert.

Sowohl der zweite Lokaloszillator 11 im Sender 1, als auch der zweite Lokaloszillator 21 beziehungsweise 21' im Empfänger 2 kann frequenzagil ausgeführt werden. Dadurch kann zunächst auch im ersten ZF-Band der Übertragungskanal im Kanalraster variiert werden. Dies ermöglicht auch in der ersten Zwischenfrequenz ein Frequenzmanagement zur weiteren Verbesserung der Störsicherheit. Da sowohl der erste Lokaloszillator 17' (im Sender) und 27' (im Empfänger) als auch der zweite Lokaloszillator 11 (im Sender) und 21 beziehungsweise 21' (im Empfänger) frequenzagil einstellbar sind, sind somit die Übertragungskanäle von HF-Band und ZF-Band unabhängig voneinander einstellbar.

Das erfindungsgemäße Konzept zeigt ein sehr kompaktes Hardwaredesign, insbesondere in den ersten beiden Ausführungsbeispielen auf der Empfängerseite, bei dem die Signalübertragung auf zwei unabhängig voneinander genutzten Frequenzbändern über einen Sende- beziehungsweise Empfangszug realisiert ist. Alternativ kann bei Verwendung zweier getrennter Empfangskanäle (drittes Ausführungsbeispiel auf der Empfängerseite) die Signalverarbeitung beider Empfangsbandsignale gleichzeitig und kohärent erfolgen. Dadurch ergibt sich ein wesentlich größerer Prozessgewinn.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

Es bezeichnen:
- 1: Sender
- 2: Empfänger
- 3: Übertragungsstrecke
- 4: Übertragungsstrecke
- 10: Digitaleinheit
- 11: Lokaloszillator im Sender
- 12: Analogeinheit
- 13: ZF-Umsetzer
- 15: erster Sendeverstärker
- 16: erste Antenne
- 17: ZF-HF-Umsetzer
- 17': Lokaloszillator im Sender
- 18: zweiter Sendeverstärker
- 19: zweite Antenne
- 20: Analogeinheit
- 21: Lokaloszillator im Empfänger
- 21': Lokaloszillator im Empfänger
- 22: Digitaleinheit / Verarbeitungseinrichtung
- 23: erste Antenne
- 24: zweite Antenne
- 25: erster Eingangsverstärker
- 26: zweiter Eingangsverstärker
- 27: HF-ZF-Umsetzer
- 27': Lokaloszillator im Empfänger
- 28: Signaladdierer
- 28': Signalumschalter
- 29: Verarbeitungseinrichtung
- 29': Signalumsetzer
- 29": Signalumsetzer
- 30: erstes moduliertes Trägersignal
- 40: zweites moduliertes Trägersignal

## Patentansprüche

1. Vorrichtung zur Informationsübertragung zwischen einem Sender (1) und einem Empfänger (2); wobei zur Übertragung der Information zwischen Sender (1) und Empfänger (2) zumindest zwei parallele Übertragungsstrecken (3, 4) vorgesehen sind, auf denen jeweils ein Trägersignal die aufmodulierte Information überträgt, wobei die Trägerfrequenz eines ersten modulierten Trägersignals (30) einer ersten Übertragungsstrecke und die Trägerfrequenz eines weiteren modulierten Trägersignals (40) einer weiteren der zumindest zwei parallelen Übertragungsstrecken unterschiedlichen Frequenzbändern angehören,
**dadurch gekennzeichnet**,
- dass die Trägerfrequenz des ersten modulierten Trägersignals (30) einem ZF-Band und die Trägerfrequenz des zumindest einen weiteren modulierten Trägersignals (40) dem HF-Band angehört,
- dass der Sender (1) einen ZF-Umsetzer (13) aufweist, der ein die Information tragendes Eingangssignal in eine Frequenz des ZF-Bandes umsetzt;
- dass der Sender (1) eine erste und zumindest eine weitere Sendevorrichtung aufweist;
- dass das ZF-Signal der ersten Sendevorrichtung (15, 16) sowie einem ZF-HF-Umsetzer (17) zugeführt wird, der das ZF-Signal in ein HF-Signal umsetzt;
- dass das HF-Signal der zumindest einen weiteren Sendevorrichtung (18, 19) zugeführt wird;
- dass der Sender (1) so ausgestaltet ist, dass er das ihm zugeführte Signal abwechselnd oder gleichzeitig über die zumindest zwei parallelen Übertragungsstrecken (3, 4) an den Empfänger (2) überträgt;
- dass der Empfänger (2) zumindest zwei jeweils einer der Übertragungsstrecken (3, 4) zugeordnete Empfangsvorrichtungen (23, 25; 24, 26) aufweist, die ausgestaltet sind, um jeweils eines der von den Sendevorrichtungen (15, 16; 18, 19) übertragenen Signale zu empfangen;
- dass der das HF-Signal empfangenden Empfangsvorrichtung (24, 26) eine HF-ZF- Umsetzungsvorrichtung (27) zugeordnet ist, die das empfangene HF-Signal in ein ZF-Signal umsetzt, welches dieselbe Trägerfrequenz aufweist wie das von der anderen Empfangsvorrichtung (23, 25) direkt empfangene ZF-Signal; und
- dass zur Weiterverarbeitung der so gewonnenen ZF-Signale entweder
· ein Signaladdierer (28) oder
· ein Signalumschalter (28')
vorgesehen ist, der aus den ihm zugeführten ZF-Signalen ein kombiniertes ZF-Signal erzeugt und an nachgeordnete Verarbeitungseinrichtungen (29, 22) zur Weiterverarbeitung und zur Rückgewinnung der Information weiterleitet.

2. Vorrichtung zur Informationsübertragung zwischen einem Sender (1) und einem Empfänger (2); wobei zur Übertragung der Information zwischen Sender (1) und Empfänger (2) zumindest zwei parallele Übertragungsstrecken (3, 4) vorgesehen sind, auf denen jeweils ein Trägersignal die aufmodulierte Information überträgt, wobei die Trägerfrequenz eines ersten modulierten Trägersignals (30) einer ersten Übertragungsstrecke und die Trägerfrequenz eines weiteren modulierten Trägersignals (40) einer weiteren der zumindest zwei parallelen Übertragungsstrecken unterschiedlichen Frequenzbändern angehören,
**dadurch gekennzeichnet**,
- dass die Trägerfrequenz des ersten modulierten Trägersignals (30) einem ZF-Band und die Trägerfrequenz des zumindest einen weiteren modulierten Trägersignals (40) dem HF-Band angehört,
- dass der Sender (1) einen ZF-Umsetzer (13) aufweist, der ein die Information tragendes Eingangssignal in eine Frequenz des ZF-Bandes umsetzt;
- dass der Sender (1) eine erste und zumindest eine weitere Sendevorrichtung aufweist;
- dass das ZF-Signal der ersten Sendevorrichtung (15, 16) sowie einem ZF-HF-Umsetzer (17) zugeführt wird, der das ZF-Signal in ein HF-Signal umsetzt;
- dass das HF-Signal der zumindest einen weiteren Sendevorrichtung (18, 19) zugeführt wird,
- dass der Sender (1) so ausgestaltet ist, dass er das ihm zugeführte Signal abwechselnd oder gleichzeitig über die zumindest zwei parallelen Übertragungsstrecken (3, 4) an den Empfänger (2) überträgt;
- dass der Empfänger (2) zumindest zwei jeweils einer der Übertragungsstrecken (3, 4) zugeordnete Empfangsvorrichtungen (23, 25; 24, 26) aufweist, die ausgestaltet sind, um jeweils eines der von den Sendevorrichtungen (15, 16; 18, 19) übertragenen Signale zu empfangen;
- dass der das HF-Signal empfangenden Empfangsvorrichtung (24, 26) eine HF-ZF- Umsetzungsvorrichtung (27) zugeordnet ist, die das empfangene HF-Signal in ein ZF-Signal umsetzt, welches dieselbe Trägerfrequenz aufweist wie das von der anderen Empfangsvorrichtung (23, 25) direkt empfangene ZF-Signal; und
- dass die gewonnenen ZF-Signale zur Weiterverarbeitung an nachgeordnete Verarbeitungseinrichtungen (29', 29"; 22) weitergeleitet werden, wo sie kohärent überlagert, demoduliert und decodiert werden, um die Information zurückzugewinnen.

3. Vorrichtung nach Anspruch 1 oder 2,
**dadurch gekennzeichnet**,
dass die Trägerfrequenz des weiteren modulierten Trägersignals (40) um einen Faktor von größer als 5 größer ist als die Trägerfrequenz des ersten modulierten Trägersignals (30).

4. Vorrichtung nach Anspruch 1 oder 2,
**dadurch gekennzeichnet**,
dass die Trägerfrequenz des weiteren modulierten Trägersignals (40) um einen Faktor 10 größer ist als die Trägerfrequenz des ersten modulierten Trägersignals (30).

5. Vorrichtung nach einem der Ansprüche 1 bis 4,
**dadurch gekennzeichnet**,
- **dass** der Sender (1) das erste modulierte Trägersignal (30) und das zumindest eine weitere modulierte Trägersignal (40) abwechselnd sendet;
- **dass** der Empfänger (2) beide modulierten Trägersignale (30, 40) empfängt; und
- **dass** das empfangene erste modulierte Trägersignal (30) und das zumindest eine empfangene weitere modulierte Trägersignal (40) gemeinsam zur Rückgewinnung der Information herangezogen werden.

6. Vorrichtung nach einem der Ansprüche 1 bis 4,
**dadurch gekennzeichnet**,
- dass der Sender (1) das erste modulierte Trägersignal (30) und das zumindest eine weitere modulierte Trägersignal (40) gleichzeitig sendet;
- dass der Empfänger die modulierten Trägersignale (30, 40) empfängt; und
- dass das empfangene erste modulierte Trägersignal (30) und das zumindest eine empfangene weitere modulierte Trägersignal (40) abwechselnd zur Rückgewinnung der Information herangezogen werden.

7. Vorrichtung nach Anspruch 6,
**dadurch gekennzeichnet**,
dass in einem vorgegebenen Zeitintervall stets dasjenige empfangene modulierte Trägersignal (30, 40) zur Rückgewinnung der Information herangezogen wird, das eine höhere Empfangsqualität und/oder eine geringere Signalstörung aufweist.

8. Vorrichtung nach einem der Ansprüche 5 bis 7,
**dadurch gekennzeichnet**,
dass die Rückgewinnung der Information durch Addition von jeweils einen Informationsbestandteil enthaltenen Signalen erfolgt, die aus den beiden empfangenen modulierten Trägersignalen (30, 40) erhalten werden.

9. Vorrichtung nach Anspruch 1 oder 2,
**dadurch gekennzeichnet**,
- dass der Sender (1) das erste modulierte Trägersignal (30) und das zumindest eine weitere modulierte Trägersignal (40) gleichzeitig sendet;
- dass der Empfänger (2) beide modulierten Trägersignale (30, 40) empfängt; und
- dass das empfangene erste modulierte Trägersignal (30) und das zumindest eine empfangene weitere modulierte Trägersignal (40) gleichzeitig gemeinsam zur Rückgewinnung der Information herangezogen werden.

10. Vorrichtung nach Anspruch 9,
**dadurch gekennzeichnet**,
dass die Rückgewinnung der Information durch kohärente Überlagerung von zumindest zwei Signalen erfolgt, die jeweils aus einem der empfangenen modulierten Trägersignale (30, 40) erhalten werden.

## Claims

1. Apparatus for information transmission between a transmitter (1) and a receiver (2); wherein at least two parallel transmission links (3, 4) are provided for the purpose of transmitting the information between the transmitter (1) and the receiver (2), said transmission links being used by a respective carrier signal to transmit the information that has been modulated on, wherein the carrier frequency of a first modulated carrier signal (30) from a first transmission link and the carrier frequency of a further modulated carrier signal (40) from a further one of the at least two parallel transmission links belong to different frequency bands,
**characterized**
- in that the carrier frequency of the first modulated carrier signal (30) belongs to an IF band and the carrier frequency of the at least one further modulated carrier signal (40) belongs to the RF band,
- in that the transmitter (1) has an IF converter (13) that converts an input signal carrying the information into a frequency of the IF band;
- in that the transmitter (1) has a first and at least one further transmission apparatus;
- in that the IF signal is supplied to the first transmission apparatus (15, 16) and to an IF/RF converter (17) that converts the IF signal into an RF signal;
- in that the RF signal is supplied to the at least one further transmission apparatus (18, 19) ;
- in that the transmitter (1) is designed such that it transmits the signal supplied to it to the receiver (2) via the at least two parallel transmission links (3, 4) alternately or simultaneously;
- in that the receiver (2) has at least two reception apparatuses (23, 25; 24, 26) that are each associated with one of the transmission links (3, 4) and that are designed to each receive one of the signals transmitted by the transmission apparatuses (15, 16; 18, 19);
- in that the reception apparatus (24, 26) receiving the RF signal has an associated RF/IF conversion apparatus (27) that converts the received RF signal into an IF signal that has the same carrier frequency as the IF signal received by the other reception apparatus (23, 25) directly; and
- in that either
. a signal adder (28) or
. a signal changeover switch (28')
is provided for the purpose of processing the IF signals obtained in this manner further, said signal adder or signal changeover switch taking the IF signals supplied to it and producing a combined IF signal and forwarding the latter to downstream processing devices (29, 22) for the purpose of further processing and for the purpose of recovering the information.

2. Apparatus for information transmission between a transmitter (1) and a receiver (2); wherein at least two parallel transmission links (3, 4) are provided for the purpose of transmitting the information between the transmitter (1) and the receiver (2), said transmission links being used by a respective carrier signal to transmit the information that has been modulated on, wherein the carrier frequency of a first modulated carrier signal (30) from a first transmission link and the carrier frequency of a further modulated carrier signal (40) from a further one of the at least two parallel transmission links belong to different frequency bands,
**characterized**
- in that the carrier frequency of the first modulated carrier signal (30) belongs to an IF band and the carrier frequency of the at least one' further modulated carrier signal (40) belongs to the RF band,
- in that the transmitter (1) has an IF converter (13) that converts an input signal carrying information into a frequency of the IF band;
- in that the transmitter (1) has a first and at least one further transmission apparatus;
- in that the IF signal is supplied to the first transmission apparatus (15, 16) and to an IF/RF converter (17) that converts the IF signal into an RF signal;
- in that the RF signal is supplied to the at least one further transmission apparatus (18, 19),
- in that the transmitter (1) is designed such that it transmits the signal supplied to it to the receiver (2) via the at least two parallel transmission links (3, 4) alternately or simultaneously;
- in that the receiver (2) has at least two reception apparatuses (23, 25; 24, 26) that are each associated with one of the transmission links (3, 4) and that are designed to each receive one of the signals transmitted by the transmission apparatuses (15, 16; 18, 19);
- in that the reception apparatus (24, 26) receiving the RF signal has an associated RF/IF conversion apparatus (27) that converts the received RF signal into an IF signal that has the same carrier frequency as the IF signal received by the other reception apparatus (23, 25) directly; and
- in that the IF signals obtained are forwarded for the purpose of further processing to downstream processing devices (29', 29"; 22) where they are coherently superimposed, demodulated and decoded in order to recover the information.

3. Apparatus according to Claim 1 or 2,
**characterized**
in that the carrier frequency of the further modulated carrier signal (40) is higher than the carrier frequency of the first modulated carrier signal (30) by a factor of greater than 5.

4. Apparatus according to Claim 1 or 2,
**characterized**
in that the carrier frequency of the further modulated carrier signal (40) is higher than the carrier frequency of the first modulated carrier signal (30) by a factor of 10.

5. Apparatus according to one of Claims 1 to 4,
**characterized**
- in that the transmitter (1) sends the first modulated carrier signal (30) and the at least one further modulated carrier signal (40) alternately;
- in that the receiver (2) receives both modulated carrier signals (30, 40); and
- in that the received first modulated carrier signal (30) and the at least one received further modulated carrier signal (40) are used jointly to recover the information.

6. Apparatus according to one of Claims 1 to 4,
**characterized**
- in that the transmitter (1) sends the first modulated carrier signal (30) and the at least one further modulated carrier signal (40) simultaneously;
- in that the receiver receives the modulated carrier signals (30, 40); and
- in that the received first modulated carrier signal (30) and the at least one received further modulated carrier signal (40) are used alternately to recover the information.

7. Apparatus according to Claim 6,
**characterized**
in that in a prescribed interval of time the information is recovered by always using that received modulated carrier signal (30, 40) that has a higher reception quality and/or less signal interference.

8. Apparatus according to one of Claims 5 to 7,
**characterized**
in that the information is recovered by adding signals that each contain an information component and that are obtained from the two received modulated carrier signals (30, 40).

9. Apparatus according to Claim 1 or 2,
**characterized**
- in that the transmitter (1) sends the first modulated carrier signal (30) and the at least one further modulated carrier signal (40) simultaneously;
- in that the receiver (2) receives both modulated carrier signals (30, 40); and
- in that the received first modulated carrier signal (30) and the at least one received further modulated carrier signal (40) are used simultaneously jointly to recover the information.

10. Apparatus according to Claim 9,
**characterized**
in that the information is recovered by means of coherent superposition of at least two signals that are each obtained from one of the received modulated carrier signals (30, 40).

## Revendications

1. Dispositif de transmission d'informations entre un émetteur (1) et un récepteur (2), au moins deux trajets de transmission (3, 4) parallèles étant prévus pour la transmission des informations entre l'émetteur (1) et le récepteur (2), sur lesquels un signal porteur transmet respectivement les informations superposées par modulation, la fréquence porteuse d'un premier signal porteur modulé (30) d'un premier trajet de transmission et la fréquence porteuse d'un signal porteur modulé supplémentaire (40) d'un trajet de transmission supplémentaire parmi les au moins deux trajets de transmission parallèles faisant partie de bandes de fréquences différentes,
caractérisé en ce
- que la fréquence porteuse du premier signal porteur modulé (30) fait partie d'une bande FI et la fréquence porteuse de l'au moins un signal porteur modulé supplémentaire (40) de la bande HF ;
- que l'émetteur (1) présente un convertisseur FI (13) qui convertit un signal d'entrée porteur des informations en une fréquence de la bande FI ;
- que l'émetteur (1) présente un premier dispositif d'émission et au moins un dispositif d'émission supplémentaire ;
- que le signal FI est acheminé au premier dispositif d'émission (15, 16) ainsi qu'à un convertisseur FI-HF (17) qui convertit le signal FI en un signal HF ;
- que le signal HF est acheminé à l'au moins un dispositif d'émission supplémentaire (18, 19) ;
- que l'émetteur (1) est configuré de telle sorte qu'il transmet le signal qui lui est acheminé au récepteur (2) en alternance ou simultanément par le biais des au moins deux trajets de transmission (3, 4) parallèles ;
- que le récepteur (2) présente au moins deux dispositifs de réception (23, 25 ; 24, 26) respectivement associés à l'un des trajets de transmission (3, 4), lesquels sont configurés pour recevoir respectivement l'un des signaux transmis par les dispositifs d'émission (15, 16 ; 18, 19) ;
- qu'un dispositif de conversion HF-FI (27) est associé au dispositif de réception (24, 26) qui reçoit le signal HF, lequel convertit le signal HF reçu en un signal FI qui présente la même fréquence porteuse que le signal FI reçu directement par l'autre dispositif de réception (23, 25) ; et
- qu'en vu du traitement postérieur des signaux FI ainsi obtenus, il est prévu
* soit un additionneur de signaux (28),
* soit un permutateur de signaux (28')
qui génère un signal FI combiné à partir des signaux FI qui lui sont acheminés et le transférant à des dispositifs de traitement (29, 22) disposés en aval en vue d'un traitement postérieur et en vue de la récupération des informations.

2. Dispositif de transmission d'informations entre un émetteur (1) et un récepteur (2), au moins deux trajets de transmission (3, 4) parallèles étant prévus pour la transmission des informations entre l'émetteur (1) et le récepteur (2), sur lesquels un signal porteur transmet respectivement les informations superposées par modulation, la fréquence porteuse d'un premier signal porteur modulé (30) d'un premier trajet de transmission et la fréquence porteuse d'un signal porteur modulé supplémentaire (40) d'un trajet de transmission supplémentaire parmi les au moins deux trajets de transmission parallèles faisant partie de bandes de fréquences différentes,
caractérisé en ce
- que la fréquence porteuse du premier signal porteur modulé (30) fait partie d'une bande FI et la fréquence porteuse de l'au moins un signal porteur modulé supplémentaire (40) de la bande HF ;
- que l'émetteur (1) présente un convertisseur FI (13) qui convertit un signal d'entrée porteur des informations en une fréquence de la bande FI ;
- que l'émetteur (1) présente un premier dispositif d'émission et au moins un dispositif d'émission supplémentaire ;
- que le signal FI est acheminé au premier dispositif d'émission (15, 16) ainsi qu'à un convertisseur FI-HF (17) qui convertit le signal FI en un signal HF ;
- que le signal HF est acheminé à l'au moins un dispositif d'émission supplémentaire (18, 19) ;
- que l'émetteur (1) est configuré de telle sorte qu'il transmet le signal qui lui est acheminé au récepteur (2) en alternance ou simultanément par le biais des au moins deux trajets de transmission (3, 4) parallèles ;
- que le récepteur (2) présente au moins deux dispositifs de réception (23, 25 ; 24, 26) respectivement associés à l'un des trajets de transmission (3, 4), lesquels sont configurés pour recevoir respectivement l'un des signaux transmis par les dispositifs d'émission (15, 16 ; 18, 19) ;
- qu'un dispositif de conversion HF-FI (27) est associé au dispositif de réception (24, 26) qui reçoit le signal HF, lequel convertit le signal HF reçu en un signal FI qui présente la même fréquence porteuse que le signal FI reçu directement par l'autre dispositif de réception (23, 25) ; et
- que les signaux FI obtenus sont transférés à des dispositifs de traitement (29', 29" ; 22) disposés en aval en vue d'un traitement postérieur, où ils sont superposés, démodulés et décodés de manière cohérente afin de récupérer les informations.

3. Dispositif selon la revendication 1 ou 2, **caractérisé en ce que** la fréquence porteuse du signal porteur modulé supplémentaire (40) est supérieure d'un facteur supérieur à 5 à la fréquence porteuse du premier signal porteur modulé (30).

4. Dispositif selon la revendication 1 ou 2, **caractérisé en ce que** la fréquence porteuse du signal porteur modulé supplémentaire (40) est supérieure d'un facteur 10 à la fréquence porteuse du premier signal porteur modulé (30).

5. Dispositif selon l'une des revendications 1 à 4, caractérisé en ce
- que l'émetteur (1) émet en alternance le premier signal porteur modulé (30) et l'au moins un signal porteur modulé supplémentaire (40) ;
- que le récepteur (2) reçoit les deux signaux porteurs modulés (30, 40) ; et
- que le premier signal porteur modulé (30) reçu et l'au moins un signal porteur modulé supplémentaire (40) reçu son utilisés en commun pour la récupération des informations.

6. Dispositif selon l'une des revendications 1 à 4, caractérisé en ce
- que l'émetteur (1) émet simultanément le premier signal porteur modulé (30) et l'au moins un signal porteur modulé supplémentaire (40) ;
- que le récepteur reçoit les signaux porteurs modulés (30, 40) ; et
- que le premier signal porteur modulé (30) reçu et l'au moins un signal porteur modulé supplémentaire (40) reçu son utilisés en alternance pour la récupération des informations.

7. Dispositif selon la revendication 6, **caractérisé en ce que** dans un intervalle de temps prédéfini, le signal porteur modulé (30, 40) reçu qui est utilisé pour la récupération des informations est toujours celui qui présente une qualité de réception la plus élevée et/ou une perturbation du signal la plus faible.

8. Dispositif selon l'une des revendications 5 à 7, **caractérisé en ce que** la récupération des informations s'effectue par addition de signaux contenant respectivement une composante d'information, lesquels sont obtenus à partir des deux signaux porteurs modulés (30, 40) reçus.

9. Dispositif selon la revendication 1 ou 2, caractérisé en ce
- que l'émetteur (1) émet simultanément le premier signal porteur modulé (30) et l'au moins un signal porteur modulé supplémentaire (40) ;
- que le récepteur (2) reçoit les deux signaux porteurs modulés (30, 40) ; et
- que le premier signal porteur modulé (30) reçu et l'au moins un signal porteur modulé supplémentaire (40) reçu son utilisés simultanément en commun pour la récupération des informations.

10. Dispositif selon la revendication 9, **caractérisé en ce que** la récupération des informations s'effectue par une superposition cohérente d'au moins deux signaux, lesquels sont respectivement obtenus à partir de l'un des signaux porteurs modulés (30, 40) reçus.
